Europäisches Patentamt

European Patent Office

Office européen des brevets

(19)

(11) Numéro de publication: **0 343 084**
**A1**

## (12) DEMANDE DE BREVET EUROPEEN

(21) Numéro de dépôt: **89401387.9**

(22) Date de dépôt: **19.05.89**

(51) Int. Cl.⁴: **F 16 L 3/18**

(30) Priorité: **19.05.88 FR 8806727**

(43) Date de publication de la demande:
**23.11.89 Bulletin 89/47**

(84) Etats contractants désignés:
**AT BE DE ES FR GB GR IT NL SE**

(71) Demandeur: **Gourvil, Jean-Pierre**
**12, rue de Douai**
**F-75009 Paris (FR)**

(72) Inventeur: **Gourvil, Jean-Pierre**
**12, rue de Douai**
**F-75009 Paris (FR)**

(74) Mandataire: **Netter, André et al**
**Cabinet NETTER 40, rue Vignon**
**F-75009 Paris (FR)**

(54) **Procédé et collier pour le maintien d'une tuyauterie rigide.**

㉗ Chaque collier (1) est polygonal et comprend deux demi-colliers (2, 3) qu'on serre l'un contre l'autre à l'aide de moyens de serrage (9,11) en entourant la tuyauterie sans serrage.

La tuyauterie est maintenue avec une possibilité de coulissement longitudinal lui permettant de se dilater sans rupture.

FIG.1

Bundesdruckerei Berlin

EP 0 343 084 A1

## Description

## Procédé et collier pour le maintien d'une tuyauterie rigide

L'invention concerne un procédé de maintien d'une tuyauterie rigide, et un collier pour la mise en oeuvre de ce procédé.

On utilise couramment, pour le maintien des tuyauteries rigides, des colliers entourant le profil de la tuyauterie et fixés sur un support par exemple mural. Chaque collier comprend deux demi-colliers articulés l'un à l'autre en un endroit du périmètre du collier, et présentant à l'endroit opposé par rapport à l'axe de la tuyauterie des moyens de serrage permettant de rapprocher les deux demi-colliers l'un de l'autre et de les serrer sur la tuyauterie.

Ces colliers sont utilisés notamment dans les industries agro-alimentaires, cosmétiques et parapharmaceutiques, en liaison avec des tuyauteries transportant des liquides bactériologiquement sensibles tels que du lait, des boissons, des produits cosmétiques, etc... Ils permettent en particulier le démontage des tuyauteries en vue de leur nettoyage ou de l'extension des réseaux.

Lorsqu'une tuyauterie est longue et qu'il y circule un fluide chaud, sa dilatation peut conduire à des variations, pouvant atteindre plusieurs décimètres, de la distance entre deux zones déterminées de sa longueur. Le procédé de maintien connu, qui immobilise par serrage des zones de la tuyauterie, contrarie cette dilatation et conduit à la déformation, à la rupture ou au dessoudage de la tuyauterie.

Par ailleurs, les moyens de serrage comprennent une tige filetée attachée à l'un des demi-colliers et un écrou s'appuyant sur une bride appartenant à l'autre demi-collier. Le rapprochement des deux demi-colliers, par les moyens de serrage, étant limité par le serrage sur la tuyauterie, la bride ne vient pas en contact avec l'autre demi-collier, de sorte que l'écrou risque de se dévisser par suite de vibrations.

Pour permettre le coulissement de la tuyauterie dans les colliers, le Brevet suisse 562 980 prévoit de munir chacun des demi-colliers métalliques d'une bande de matière plastique recouvrant la face de celui-ci tournée vers la tuyauterie. Ces bandes de matière plastique se prolongent entre des brides de serrage prévues en deux endroits diamétralement opposés du collier. Les deux demi-colliers sont serrés l'un sur l'autre par leurs brides, par l'intermédiaire des bandes de matière plastique, et non sur la tuyauterie.

Cependant, les bandes de matière plastique peuvent subir un vieillissement en raison de la température élevée de la tuyauterie et/ou de substances présentes dans l'atmosphère de l'atelier. De plus, elles risquent d'être déformées ou déplacées par les mouvements de la tuyauterie.

Le but de l'invention est d'éliminer ces inconvénients.

L'invention vise un procédé de maintien d'une tuyauterie rigide au moyen de colliers entourant le profil de la tuyauterie et fixés sur un support, chaque collier comprenant deux demi-colliers qui peuvent être rapprochés l'un de l'autre par des moyens de serrage prévus en un endroit au moins du périmètre du collier, procédé dans lequel on serre les moyens de serrage jusqu'à amener les deux demi-colliers en appui mutuel au(x)dit(s) endroit(s) sans serrer les demi-colliers sur la tuyauterie de façon à permettre un coulissement longitudinal de celle-ci par rapport aux colliers.

Selon l'invention, les colliers ont un profil sensiblement polygonal, de façon à venir en contact avec la tuyauterie en des endroits discrets de son périmètre.

Grâce au profil polygonal des colliers, ceux-ci, qui sont généralement en métal, peuvent venir en contact direct avec la tuyauterie en des endroits discrets de son périmètre, sans opposer de résistance au glissement longitudinal de cette dernière.

Selon un mode de réalisation de l'invention, chaque collier comporte des moyens de serrage en un premier endroit et une articulation entre les deux demi-colliers à l'endroit de son périmètre opposé au premier par rapport à l'axe de la tuyauterie.

Selon un autre mode de réalisation, chaque collier comporte des moyens de serrage en deux endroits de son périmètre, opposés l'un à l'autre par rapport à l'axe de la tuyauterie.

L'invention a également pour objet un collier pour le maintien d'une tuyauterie par le procédé défini ci-dessus, comprenant deux demi-colliers qui peuvent être amenés en appui mutuel, en un endroit au moins du périmètre du collier, par des moyens de serrage, en formant un anneau rigide à profil sensiblement polygonal circonscrivant le profil de la tuyauterie à laquelle le collier est destiné sans être serré sur celui-ci.

D'autres caractéristiques et avantages de l'invention ressortiront de la description détaillée ci-après de quelques exemples de réalisation, et des dessins annexés dans lesquels :

- la figure 1 est une vue en élévation d'un premier exemple de réalisation d'un collier selon l'invention ;
- la figure 2 est une vue de dessus de l'un des deux demi-colliers identiques constitutifs du collier de la figure 1;
- les figures 3 et 4 sont des vues en élévation d'un second exemple de réalisation du collier selon l'invention, équipé respectivement de deux éléments de liaison différents à un support ;
- les figures 5 et 6 sont des vues en élévation des deux demi-colliers constitutifs du collier des figures 3 et 4 ;
- les figures 7 et 8 sont des vues de dessus de ces mêmes demi-colliers ; et
- les figures 9 et 10 représentent des pièces servant à l'articulation et au serrage du collier des figures 3 et 4.

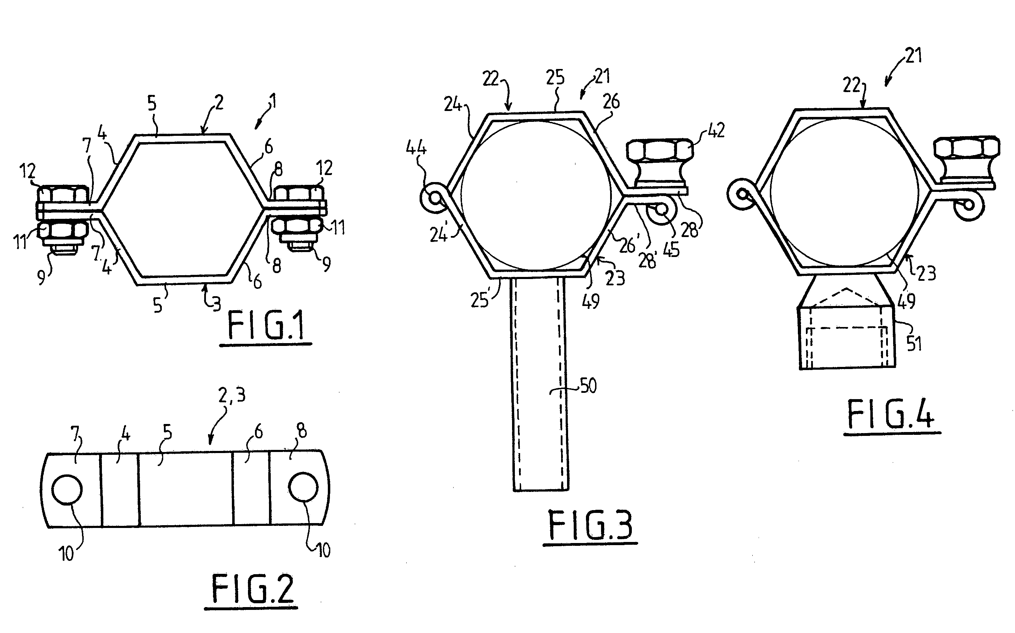

Le collier 1 illustré à la figure 1 comprend deux demi-colliers 2 et 3 identiques, formés chacun à partir d'une bande d'acier inoxydable d'une largeur d'environ 25 mm et d'une épaisseur d'environ 2,5 mm. La bande est pliée selon des plis transversaux pour former trois faces adjacentes 4,5 et 6 d'un prisme à section hexagonale régulière, ainsi que deux brides d'extrémités 7 et 8 s'étendant dans un même plan vers l'extérieur du prisme. On forme le collier 1 en disposant les deux demi-colliers 2 et 3 de façon que les brides 7 et 8 soient deux à deux en regard l'une de l'autre et que les segments 4, 5 et 6 constituent ensemble un prisme hexagonal régulier. Deux vis 9 sont engagées dans des trous 10 prévus dans les brides 7 et 8 et des écrous 11 sont vissés sur ces vis jusqu'à ce que les brides soient serrées entre les écrous et les têtes 12 des vis. Avant d'assembler ainsi les deux demi-colliers autour d'une tuyauterie, on peut souder l'un de ceux-ci sur un support fixe, par exemple mural.

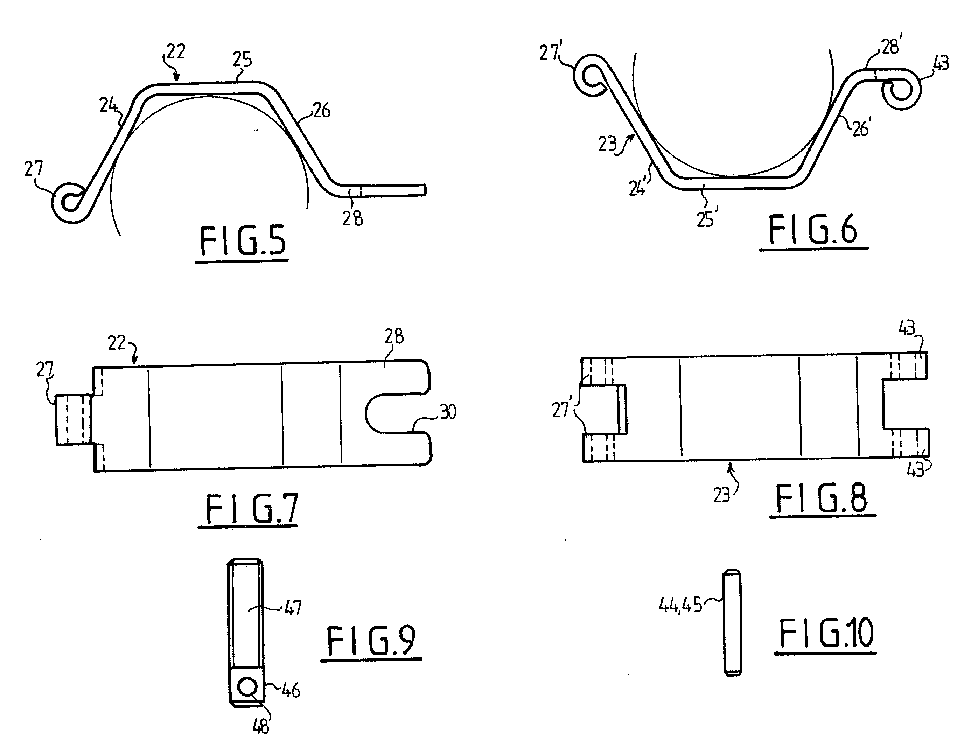

Le collier 21 représenté aux figures 3 et 4 et ses éléments constitutifs sont désignés par les mêmes numéros de référence dans ces figures. Les mêmes numéros de référence sont également utilisés dans les figures 5 à 10, relatives aux différentes pièces formant le collier.

Le collier 21 comprend un demi-collier supérieur 22 et un demi-collier inférieur 23 découpés dans une bande semblable à celle à partir de laquelle sont réalisés les demi-colliers 2 et 3 décrits précédemment. Le demi-collier 22 comprend trois segments 24, 25 et 26 dont la forme et la disposition relatives sont semblables à celles des segments 4, 5 et 6 du demi-collier 2. Au segment 26 se raccorde une bride terminale 28 semblable à la bride 8, à ceci près que le trou 10 y est remplacé par une encoche longitudinale 30 s'étendant à partir de l'extrémité libre de la bride. La bride 7 du demi-collier 2 est remplacée dans le demi-collier 22 par une portion 27 roulée en forme de gond vers l'extérieur du collier et qui s'étend seulement sur une partie médiane de la largeur de la bande. Le demi-collier inférieur 23 comprend également des segments 24′, 25′ et 26′ semblables aux segments 4, 5 et 6 du demi-collier 3 et disposés de la même façon les uns par rapport aux autres. Une bride terminale 28′ se raccordant au segment 26′ s'étend d'abord, à partir de celui-ci, dans la même direction que la bride 8 du demi-collier 3, puis s'enroule en forme de gond du côté opposé par rapport à la bride 28 du demi-collier 22. Le gond 43 ainsi formé s'étend seulement sur deux portions marginales de la largeur de la bande constitutive du demi-collier 23. A l'opposé de la bride 28′, le demi-collier 23 présente, dans le prolongement du segment 24′, une portion 27′ roulée en forme de gond à l'extérieur du collier et s'étendant sur deux parties marginales de la largeur de la bande complémentaires de la partie médiane occupée par le gond 27 du demi-collier 22.

Pour constituer le collier 21, on dispose les demi-colliers 22 et 23 de façon que leurs segments 24, 25, 26 et 24′, 25′, 26′ forment un prisme hexagonal régulier, le gond 27 venant s'aligner entre les deux parties du gond 27′, et on enfile dans ces derniers une tige cylindrique 44 telle que représentée à la figure 10, qui constitue un axe d'articulation mutuel des deux demi-colliers. Une autre tige cylindrique 45 semblable à la tige 44 est enfilée dans les deux parties du gond 43 et dans la partie extrême 46 d'une tige filetée 47 qui présente à cet effet un trou transversal 48. La partie extrême 46 est disposée entre les deux parties du gond 43, de sorte que la tige filetée 47 peut pivoter par rapport au demi-collier 23 autour de l'axe constitué par la tige 45. Elle peut alors pénétrer dans l'encoche 30, permettant à un écrou 42 coopérant avec son filetage de s'appuyer sur la bride 28 et d'appliquer celle-ci contre la bride 28′, comme représenté aux figures 3 et 4.

On a représenté aux figures 3 et 4 un cercle 49 qui s'inscrit dans le profil intérieur du collier hexagonal, et qui correspond au profil de la tuyauterie à laquelle est destiné le collier. On utilise dans l'industrie agro-alimentaire notamment des diamètres de tuyauterie normalisés dont les plus courants sont 25, 38, 51, 63,5, 76 et 104 mm. Les colliers selon l'invention sont donc dimensionnés de façon que le diamètre du cercle 49 corresponde à ces valeurs.

Le collier n'étant pas serré sur la tuyauterie, celle-ci peut y coulisser librement en fonction de sa dilatation, sans que se produisent de contraintes conduisant à des déformations ou à des ruptures. De plus, en raison du profil hexagonal du collier, la tuyauterie ne peut venir en contact avec lui qu'en des zones discrètes de son périmètres, réduisant ainsi les frottements et facilitant le coulissement de la tuyauterie. Ces zones de contact sont au nombre de six lorsque le profil de la tuyauterie est rigoureusement circulaire et que celui du collier est un hexagone régulier. Dans le cas contraire, le nombre de ces zones peut être réduit à quatre ou à trois sans nuire au maintien de la tuyauterie.

Enfin, les brides 28 et 28′ étant serrées l'une contre l'autre par l'action de l'écrou 42, ces éléments ne peuvent se déplacer les uns par rapport aux autres par suite de vibrations et provoquer un desserrage de l'écrou.

Tous les avantages qui viennent d'être décrits sont également valables pour le collier 1 représenté à la figure 1.

Aux figures 3 et 4, le collier 21 est équipé d'éléments de fixation classiques, à savoir respectivement un tube 50 destiné à être soudé sur un support fixe et une douille filetée 51 destinée à être vissée sur un tel support. Ces éléments 50 et 51 sont soudés sur le segment médian 25′ du demi-collier 23. Ils pourraient également être soudés sur un autre segment.

Le profil hexagonal illustré pour le collier peut être remplacé par un autre profil polygonal, ou par tout autre profil ménageant des zones de contact discrètes avec la tuyauterie.

**Revendications**

1. - Procédé de maintien d'une tuyauterie rigide au moyen de colliers entourant le profil de la tuyauterie et fixés sur un support, chaque collier (1) comprenant deux demi-colliers (2,3) qui peuvent être rapprochés l'un de l'autre par des moyens de serrage (9,11) prévus en un endroit au moins du périmètre du collier, procédé dans lequel on serre les moyens de serrage jusqu'à amener les deux demi-colliers en appui mutuel au(x)dit(s) endroit(s), sans serrer les demi-colliers sur la tuyauterie de façon à permettre un coulissement longitudinal de celle-ci par rapport au collier, caractérisé en ce que les colliers ont un profil sensiblement polygonal de façon à venir en contact avec la tuyauterie en des endroits discrets de son périmètre.

2. - Procédé selon la revendication 1, caractérisé en ce que chaque collier (21) comporte des moyens de serrage (42,45;47) en un premier endroit et une articulation (27, 27',44) entre les deux demi-colliers (22,23) à l'endroit de son périmètre opposé au premier par rapport à l'axe de la tuyauterie.

3. - Procédé selon la revendication 1, caractérisé en ce que chaque collier (1) comporte des moyens de serrage (9,11) en deux endroits de son périmètre opposés l'un à l'autre par rapport à l'axe de la tuyauterie.

4. - Procédé selon l'une des revendications précédentes, caractérisé en ce que le profil des colliers est hexagonal.

5. - Procédé selon l'une des revendications précédentes, caractérisé en ce que les demi-colliers sont en métal et viennent en contact direct avec la tuyauterie.

6. Procédé selon la revendication 5, caractérisé en ce que les demi-colliers sont en acier inoxydable.

7. - Collier (1) pour le maintien d'une tuyauterie par le procédé selon l'une des revendications précédentes, comprenant deux deml-colliers (2,3) qui peuvent être amenés en appui mutuel, en un endroit au moins du périmètre du collier, par des moyens de serrage (9,11) en formant un anneau rigide à profil sensiblement polygonal circonscrivant le profil de la tuyauterie à laquelle le collier est destiné sans être serré sur celle-ci.

FIG.1

FIG.2

FIG.3

FIG.4

EP 0 343 084 A1

FIG.5

FIG.6

FIG.7

FIG.8

FIG.9

FIG.10

Office européen
des brevets

# RAPPORT DE RECHERCHE EUROPEENNE

Numero de la demande

EP 89 40 1387

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| Y,D | CH-A- 562 980 (STÄHLI)<br>* Colonne 2, lignes 10-14; figures * | 1 | F 16 L 3/18 |
| A | | 3,7 | |
| Y | FR-A-2 520 945 (ESSILOR INT.)<br>* Figure 4 * | 1 | |
| A | | 2-4,7 | |
| A | DE-A-2 854 924 (DIPA MATTHIAS)<br>* Figures * | 1-4,7 | |
| A | FR-A-2 591 709 (WEISS)<br>* Page 4, lignes 17-22; figures * . | 1,2,5 | |

DOMAINES TECHNIQUES RECHERCHES (Int. Cl.4)

F 16 L

Le présent rapport a été établi pour toutes les revendications

| Lieu de la recherche | Date d'achèvement de la recherche | Examinateur |
|---|---|---|
| LA HAYE | 23-08-1989 | HUBEAU M.G. |